# EUROPÄISCHE PATENTSCHRIFT

(11) **EP 2 660 105 B1**
(45) Veröffentlichungstag und Bekanntmachung des Hinweises auf die Patenterteilung: **07.01.2015**
(21) Anmeldenummer: 12193433.5
(22) Anmeldetag: 20.11.2012
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 06.11.2013
(73) Patentinhaber: Metalsa Automotive GmbH, 51702 Bergneustadt (DE)
(72) Erfinder: Hellweg, Dr. Hans-Bernd, 53819 Neunkirchen-Seelscheid (DE); Helsper, Michael, 57078 Siegen (DE)
(74) Vertreter: Kalkoff & Partner

(56) Entgegenhaltungen:
- EP-A1- 2 239 166
- "ADVERTISEMENT", REVUE TECHNIQUE AUTOMOBILE, ETAI, BOULOGNE-BILLANCOURT, FR, Bd. 45, Nr. 519, 1. September 1990 (1990-09-01), Seite XXXIX, XP000172636, ISSN: 1621-3815

## Beschreibung

Die Erfindung betrifft ein Überrollschutzsystem für Kraftfahrzeuge, mit einer am Kraftfahrzeug anordbaren Aufnahmeeinheit und einem zwischen einer Lagerungsposition und einer Überschlagsposition verstellbar an der Aufnahmeeinheit angeordnetem Überrollkörper.

Überrollschutzsysteme der eingangs genannten Art sind in vielfältigen Ausgestaltungen aus dem Stand der Technik bekannt. Sie dienen bei Kraftfahrzeugen wie Cabriolets oder Roadstern, bei denen das Dach zwischen einer den Innenraum verdeckenden und einer diesen freigebenden Position verstellbar ist, dazu, im Falle eines Überschlags die Fahrzeuginsassen vor Verletzungen zu schützen, in dem sie in der Überschlagsposition den Insassen einen Überlebensraum bereit stellen, wenn das Fahrzeug beim Überschlag auf den aufgestellten Überschlagkörpern abrollt.

Neben starr am Fahrzeug angeordneten Überrollbügeln, welche sich sowohl über die gesamte Fahrzeugbreite erstrecken können, aber auch nur jeweils hinter einem Fahrzeugsitz angeordnet sein können, werden vermehrt sogenannte aktive Überrollschutzsysteme eingesetzt, bei denen sich die Überrollkörper im Normalzustand in einer Lagerungsposition befinden, in der sie von außen nicht sichtbar sind. Eine Verlagerung der Überrollkörper erfolgt nur im Bedarfsfall, nämlich bei einem drohenden Überschlag, wobei dann der Überrollkörper in die Überschlagsposition verstellt wird. In der Überschlagsposition stellt der Überrollkörper in Verbindung mit der Karosserie den für die Insassen nötigen Überlebensraum bereit.

Überrollkörper, bspw. Überrollbügel, Klappbügel oder einfach geformte Profilkörper, die in der Lagerungsposition hinter den Fahrzeugsitzen von außen im Wesentlichen unsichtbar angeordnet sind und sich im Falle eines Überschlags selbsttätig aufstellen, stellen eine bevorzugte Ausführungsform der aktiven Überrollschutzsysteme dar. Zwingende Voraussetzung für die Einsetzbarkeit aller aktiven Systeme ist dabei, dass der Überrollkörper im Bedarfsfall schlagartig in die die Insassen schützende Überschlagsposition verlagert wird.

Die Überrollschutzsysteme weisen dabei mit der Fahrzeugkarosserie verbindbare Aufnahmeeinheiten auf, die eine ortsfeste Anordnung des Überrollschutzsystems an dem Fahrzeug ermöglichen. Darüber hinaus dienen die Aufnahmeeinheiten dazu, auf den Überrollkörper wirkende Belastungen in die Fahrzeugkarosserie zu übertragen. Die Übertragung der auftretenden Belastungen, nämlich in Fahrzeuglängs-, Fahrzeugquer- und/oder Fahrzeughochachsenrichtung macht es erforderlich, die Aufnahmeeinheit entsprechend stabil auszugestalten, was jedoch der grundsätzlichen Anforderung einer Gewichts- sowie Kostenreduzierung im Automobilbau entgegensteht.

Die EP 2239166 offenbart ein Überrollschutzsystem gemäß dem Oberbegriff des Anspruchs 1.

Der Erfindung liegt die Aufgabe zugrunde, ein Überrollschutzsystem bereitzustellen, dass ein geringes Gewicht aufweist und sich kostengünstig produzieren lässt, wobei das Überrollschutzsystem gleichzeitig eine ausreichend hohe Stabilität zur Übertragung der im Überschlagsfall auftretenden Kräfte besitzt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Gemäß der Erfindung ist die Aufnahmeeinheit, über die sich der Überrollkörper zumindest im Überschlagsfall an der Fahrzeugkarosserie abstützt, durch ein zumindest bereichsweise doppelwandiges Profil gebildet. Das doppelwandige Profil ist dabei derart ausgebildet, dass die Aufnahmeeinheit in der Überschlagsposition des Überrollkörpers zumindest die quer zu diesem auf Ihnen wirkenden Belastungen auf die Fahrzeugkarosserie überträgt. Die Aufnahmeeinheit dient somit zur Lastaufnahme der auf den Überrollkörper wirkenden Belastungen und leitet diese in die Fahrzeugkarosserie ein.

Erfindungsgemäß ist dazu der zwischen der Innenwand und Außenwand bestehende Hohlraum zumindest abschnittsweise mit einem Füllstoff ausgefüllt. Der Füllstoff bewirkt eine Abstützung der Innenwand und Außenwand zueinander, wodurch einem Kollabieren des doppelwandigen Profils im Belastungsfall zuverlässig entgegengewirkt wird. Der Füllstoff muss sich dabei nicht über die gesamte Länge oder den gesamten Umfang der Aufnahmeeinheit erstrecken, sondern kann auf Bereiche beschränkt werden, auf welche im Überschlagsfall die höchsten Belastungen wirken. Unter der Länge der Aufnahmeeinheit wird dabei deren Erstreckung in Längsachsenrichtung des Überrollkörpers verstanden, entlang derer sich der Überrollkörper zwischen der Lagerungsposition und der Überschlagsposition bewegen lässt. Auch kann sich der Hohlraum aus einzelnen, voneinander getrennten Kammern zusammensetzen, die in voneinander abweichender Weise mit Füllstoff ausgefüllt sein können, wobei die erfindungsgemäß abschnittweise Ausfüllung des Hohlraums auch die Möglichkeit bietet, einzelne Kammern nicht mit Füllstoff zu befüllen.

Die Verwendung eines Füllstoffs ermöglicht es, die Wände des Profils mit besonders geringen Wanddicken, bspw. Blechdicken von 0,5 mm bis 2 mm auszugestalten, so dass insgesamt die Aufnahmeeinheit ein nur geringes Gewicht aufweist. Die für die Kraftübertragung im Überschlagsfall notwendige Stabilität wird durch den Füllstoff gewährleistet, welcher auf die Bereiche beschränkt werden kann, in denen Belastungen erwartet werden, welche andernfalls zu einer Zerstörung oder Verformung des Profils im nicht mehr tolerierbaren Umfang führen würden. Die erfindungsgemäße Ausgestaltung des Überrollschutzsystems ermöglicht bspw. die kostengünstige Herstellung der Aufnahmeeinheit als Extrusionskörper mit durchgehend geringen Wanddicken, wobei den höher belasteten Bereichen durch den Füllstoff die erforderliche Stabilität verliehen wird.

Insgesamt weist somit die Aufnahmeeinheit bei einer gleichzeitig ausreichenden Stabilität ein besonders geringes Gewicht auf, wobei eine frei wählbare Einbringung des Füllstoffs entsprechend unterschiedlicher Belastungsfälle die Herstellung besonders kosteneffizienter sowie leichtgewichtiger Überrollschutzsysteme ermöglicht.

Die als Profil ausgebildete Aufnahmeeinheit des Überrollschutzsystems kann sich grundsätzlich in beliebiger Form um den Überrollkörper herum erstrecken. So ist es bspw. möglich, die Aufnahmeeinheit in beliebiger Länge auszugestalten. Ebenso kann die Aufnahmeeinheit derart ausgebildet sein, dass sie den Überrollkörper nur abschnittsweise, nämlich in Abhängigkeit von den auftretenden Belastungen, umgibt.

Nach der Erfindung ist vorgesehen, dass die Aufnahmeeinheit koaxial zum Überrollkörper angeordnet ist. Die koaxiale Anordnung, wobei dabei die Aufnahmeeinheit den Überrollkörper vollständig umgibt, gewährleistet eine besonders zuverlässige und effiziente Übertragung sämtlicher im Überschlagsfall quer auf den Überrollkörper wirkenden Kräfte auf die Aufnahmeeinheit und von dieser in die Fahrzeugkarosserie. Ein vollständig um den Überrollkörper umlaufendes Profil ermöglicht darüber hinaus eine besonders einfache und zuverlässige Einbringung des Füllstoffs in den zwischen der Innenwand und der Außenwand ausgebildeten Hohlraum.

Der Hohlraum kann erfindungsgemäß sowohl als durchgängiger Hohlraum ausgebildet sein, sich jedoch auch aus einzelnen Kammern zusammensetzen, welche bspw. durch sich zwischen der Innenwand und der Außenwand erstreckende Stege voneinander abgegrenzt sind. Auch kann das Profil- in Umfangsrichtung betrachtet - abschnittsweise einwandig ausgestaltet sein, wodurch der Hohlraum ebenfalls unterbrochen wird. Die frei wählbare Ausgestaltung des Profils mit doppelwandigen und einwandigen Bereichen ermöglicht es, die Aufnahmeeinheit besonders gewichtssparend sowie mit einem geringen Bauraum auszuführen. Eine doppelwandige Ausgestaltung kann auf die Bereiche beschränkt werden, in denen erhöhte Belastungen zu erwarten sind und welche dann ganz oder teilweise mit einem Füllstoff ausgefüllt sind.

Die endseitige - in Längsachsenrichtung betrachtet - Ausgestaltung des Profils ist grundsätzlich frei wählbar. So ist es bspw. möglich, das Profil endseitig, bspw. durch geeignete Verschlusselemente, zu verschließen. Nach einer besonders vorteilhaften Ausgestaltung der Erfindung ist jedoch vorgesehen, dass das Profil in Längsachsenrichtung endseitig offen ausgebildet ist, und dass das Profil zumindest einenends durch den Füllstoff verschlossen ist. Durch diese, eine Abdichtung bewirkende Ausgestaltung der Erfindung kann in zuverlässiger Weise das Eindringen von Verschmutzungen oder Feuchtigkeit in die Aufnahmeeinheit, welche zu einer Beschädigung des Überrollschutzsystems durch Korrosion führen könnte, verhindert werden. Die Verwendung des Füllstoffs zum Abschluss des Profils lässt sich darüber hinaus besonders kostengünstig herstellen und ermöglicht es auf separate Verschlusselemente zu verzichten.

Grundsätzlich kann bereits durch die erfindungsgemäße Ausgestaltung mit einer zumindest partiellen Ausfüllung des vorhandenen Hohlraums die geforderte Lastaufnahmeeigenschaft der Aufnahmeeinheit erreicht werden. Nach einer vorteilhaften Weiterbildung der Erfindung ist jedoch vorgesehen, dass mindestens zwei Bereiche des ausgefüllten Hohlraums durch ein Zug-/ Druckelement verbunden sind. Die Verwendung eines Zug-/Druckelements, welches üblicherweise zwei gegenüberliegend zum Überrollkörper angeordnete Bereiche des Hohlraums verbindet, ermöglicht es, die Lastaufnahmeeigenschaften der durch den Überrollkörper druckbelasteten Bereiche zu steigern. Über das Zug-/Druckelement können die auftretenden Druckbelastungen als Zugbelastungen auf die den druckbelasteten Bereichen gegenüberliegenden Bereiche übertragen werden. Die Ausgestaltung des Zug-/Druckelements ist dabei grundsätzlich frei wählbar. So kann dies bspw. durch einen einfachen Metallkörper, bspw. ein Metallstab oder -strebe gebildet sein, welcher über zwei im Abstand voneinander angeordnete Schrauben, Stifte oder Bolzen mit zwei im Abstand voneinander angeordneten Bereichen des ausgefüllten Hohlraums verbunden sind. Das Zug-/Druckelement kann auch als Hybridbauteil ausgeführt werden, bei dem ein Metallbauteil in einen Kunststoffkörper eingebettet ist, bspw. durch Umspritzen eines Metalleinlegers. Somit kann in besonders einfacher und kostengünstiger Weise die Lastaufnahmefähigkeit der Aufnahmeeinheit gesteigert werden.

Als Füllstoff können grundsätzlich beliebige Materialien verwendet werden, welche eine ausreichende Abstützung gewährleisten. So könnte als Füllstoff bspw. auch ein Metallschaum oder -granulat verwendet werden, welcher an geeigneter Stell in dem Hohlraum platziert wird. Auch kann der Füllstoff in loser, bspw. schüttfähiger Form vorliegen, sofern gewährleistet ist, dass der eingefüllte Füllstoff in der für ihn vorgesehenen Position lagegesichert ist.

Nach einer besonders vorteilhaften Ausgestaltung der Erfindung ist jedoch vorgesehen, dass der Füllstoff durch einen Kunststoff, insbesondere einen Kunststoffkörper gebildet ist. Die Verwendung eines Kunststoffs als Füllstoff zeichnet sich dabei dadurch aus, dass dieser bei einem geringen Gewicht eine hohe Druckfestigkeit, in Abhängigkeit von der Materialauswahl, aufweisen kann. Die vielfältigen erhältlichen, verwendbaren Kunststoffe ermöglichen es dabei, die Aufnahmeeinheit in optimaler Weise mit der geforderten Druckfestigkeit auszugestalten. So kann der Kunststoff, bzw. der Kunststoffkörper neben der geforderten Druckfestigkeit ferner Dämpfungseigenschaften aufweisen, die es ermöglichen, im Falle eines Überschlagsfalls, die bei einem Kopfaufprall auf den Überrollkörper wirkende Belastungen durch Verformung des Profils, bzw. Kompression des Füllstoffs abzubauen, wodurch entsprechende Verletzungen in erheblichem Maße reduziert werden können. Die Kompressionsfähigkeit lässt sich dabei in einfacher Weise über die Auswahl des Kunststoffs einstellen.

Der Füllstoff, insbesondere Kunststoffkörper kann dabei in beliebiger Weise ausgebildet sein, sich auch aus einzelnen, separaten Füllstoffelementen, insbesondere Kunststoffelementen zusammensetzen, welche einzeln in ggf. vorhandenen einzelnen Kammern des Hohlraums eingesetzt werden. Nach einer besonders vorteilhaften Ausgestaltung der Erfindung ist jedoch vorgesehen, dass der Füllstoff, insbesondere Kunststoffkörperdurch einzelne an einem Träger angeordnete Füllstoffelemente, insbesondere Kunststoffelemente gebildet ist. Die Anordnung der Füllstoff-/Kunststoffelemente an dem Träger erfolgt entsprechend der Ausrichtung ggf. vorhandener einzelner Kammern des Hohlraums, so dass bei einer entsprechenden Ausgestaltung der Erfindung eine einfache Montage des Füllstoffs, vorzugsweise Kunststoffkörpers an dem Profil möglich ist. Der Träger, welcher bspw. durch eine einfache Kunststoffplatte gebildet sein kann, kann darüber hinaus derart ausgestaltet sein, dass er umlaufend einenends auf dem Profil aufliegt und somit dieses vor dem Eindringen von Feuchtigkeit oder Verschmutzungen schützt und auch zur Lagesicherung dient.

Gemäß einer vorteilhaften Weiterbildung der Erfindung kann der Träger ferner auch als Zug-/Druckelement ausgebildet sein, wobei besonders vorteilhafterweise der Träger durch ein Metall-Kunststoff-Hybridbauteil gebildet ist, bei dem in einen Kunststoff eine Metallplatte oder Metalleinleger eingebettet ist.

Neben der Einbringung des Füllstoffs durch das Einstecken geeigneter Körper sowie der Verwendung eines schüttfähigen Gutes ist nach einer weiteren Ausgestaltung der Erfindung vorgesehen, dass der Hohlraum, bzw. einzelne Kammern des Hohlraums zur Bildung des Kunststoffkörpers mit flüssigem Kunststoff ausgegossen sind. Diese Ausgestaltung der Erfindung gewährleistet eine besonders homogene Verteilung des Kunststoffs in dem Hohlraum, wodurch auch eine besonders zuverlässige Abdichtung des Hohlraums gegenüber äußeren Einflüssen sowie eine gute Abstützung von Innenwand zu Außenwand erreicht wird.

Nach einer alternativen vorteilhaften Weiterbildung der Erfindung ist der Füllstoff, insbesondere Kunststoffkörper in den Hohlraum eingesteckt. Diese Ausgestaltung der Erfindung weist gegenüber der vorteilhafterweise vorgesehenen Ausgestaltung, wonach der Hohlraum mit flüssigem Kunststoff ausgegossen wird, einen geringeren Montageaufwand auf, so dass sich die Aufnahmeeinheit besonders kostengünstig herstellen lässt.

Die Festlegung des Füllstoffs, insbesondere Kunststoffkörpers an dem Profil kann grundsätzlich in beliebiger Weise erfolgen. Nach einer besonders vorteilhaften Ausgestaltung der Erfindung ist jedoch vorgesehen, dass der Füllstoff, insbesondere Kunststoffkörper kraft- und/oder stoffschlüssig mit dem Profil verbunden ist. Eine entsprechende Ausgestaltung gewährleistet eine zuverlässige und sichere Anordnung, bspw. des Kunststoffkörpers, an dem Profil, wobei gleichzeitig ein nur geringer Montageaufwand erforderlich ist. Eine kraftschlüssige Anordnung kann bspw. durch ein geringes Übermaß des Füllstoffs bzw. Kunststoffkörpers erreicht werden, so dass im montierten Zustand eine elastische Verformung eine zuverlässige Anordnung gewährleistet. Ergänzend zur kraftschlüssigen Anordnung oder alternativ hierzu kann der Füllstoff oder Kunststoffkörper stoffschlüssig, bspw. durch Verkleben, mit dem Profil verbunden werden, wodurch ebenfalls eine zuverlässige Anordnung gewährleistet ist. Zur Erleichterung der Montage können zudem Einlaufschrägen vorgesehen werden, so dass insgesamt eine einfache und kostengünstige Montage des Füllstoffs oder Kunststoffkörpers an dem Profil durchgeführt werden kann.

Alternativ zur vorzugsweise vorgesehenen kraft- und/oder stoffschlüssigen Anordnung des Füllstoffs, insbesondere Kunststoffs oder aber zusätzlich zu einer derartigen Anordnung ist nach einer Weiterbildung der Erfindung vorgesehen, dass der Füllstoff, insbesondere Kunststoffkörper mit dem Profil verschraubt ist. Eine derartige Lagesicherung zeichnet sich durch seine besonders hohe Positionssicherheit aus, welche die Funktion des Überrollschutzsystems in zuverlässiger Weise gewährleistet. Auch Bolzen oder Stifte können zur Lagesicherung verwendet werden.

Wie bereits eingangs dargestellt, kann der Füllstoff grundsätzlich beliebig ausgestaltet sein. Bereits die Verwendung eines Kunststoffs gemäß einer Weiterbildung der Erfindung weist die zuvor beschriebenen Vorteile auf. Die Ausgestaltung des Kunststoffkörpers ist dabei, wie ebenfalls zuvor dargelegt, frei wählbar, wobei die vielfältigen, unterschiedlichen Kunststoffe verschiedenste Möglichkeiten zur Ausgestaltung des Kunststoffkörpers und dessen Eigenschaften bieten. Denkbar ist beispielsweise auch die Verwendung faserverstärkter Kunststoffe mit entsprechend festigkeitssteigenden Eigenschaften.

Nach einer besonders vorteilhaften Ausgestaltung der Erfindung ist vorgesehen, dass der Füllstoff, insbesondere Kunststoffkörper senkrecht zur Verstellrichtung des Überrollkörpers betrachtet, Bereiche unterschiedlicher Festigkeit aufweist. Gemäß dieser Ausgestaltung der Erfindung weist der Füllstoff bzw. Kunststoffkörper, von der Außenwand zur Innenwand betrachtet, Bereiche mit unterschiedlichen Festigkeitseigenschaften auf, so dass bspw. die Möglichkeit besteht, den Kunststoffkörper im Kontaktbereich mit der In-und/oderAußenwand elastischer auszugestalten, als den übrigen Bereich des Kunststoffkörpers. Hierdurch besteht die Möglichkeit der Aufnahmeeinheit definierte Verformungseigenschaften bereitzustellen, welche den Abbau von im Falle eines Kopfaufpralls auf den Überrollkörper wirkenden und auf die Aufnahmeeinheit übertragenden Belastungen durch Verformung ermöglicht.

Die Ausgestaltung des Füllstoffs, insbesondere Kunststoffkörpers derart, dass dieser Bereiche unterschiedlicher Festigkeit aufweist, ist grundsätzlich frei wählbar. Nach einer vorteilhaften Ausgestaltung der Erfindung ist vorgesehen, dass der Kunststoffkörper hierzu aus zwei oder mehreren Kunststoffen unterschiedlicher Festigkeiten gebildet ist, welche die Bereiche unterschiedlicher Festigkeit des Kunststoffkörpers bilden. Auch ist es gemäß einer vorteilhaften Weiterbildung möglich, den Füllstoff, insbesondere Kunststoffkörper außenseitig mit Rippen zu versehen, die besonders bevorzugt aus einem gegenüber dem übrigen Füllstoff, insbesondere Kunststoffkörper abweichenden, insbesondere weicheren Kunststoff gebildet sind. Eine entsprechende Ausgestaltung der Erfindung gewährleistet zum einen eine gute kraftschlüssige Verbindung des bspw. Kunststoffkörpers an dem Profil und gewährleistet überdies gleichzeitig gute Dämpfungseigenschaften zur Reduzierung der Kopfbelastung im Falle eines Aufpralls auf den Überrollkörper.

Nach einer weiteren Ausgestaltung der Erfindung kann die Aufnahmeeinheit auch dadurch mit Bereichen unterschiedlicher Festigkeit - senkrecht zur Verstellrichtung des Überrollkörpers betrachtet - versehen werden, in dem der Füllstoff, insbesondere Kunststoffkörper zusätzliche Hohlräume aufweist, welche im Bereich zwischen der Innenwand und der Außenwand angeordnet sind.

Ausführungsbeispiele der Erfindung werden nachstehend mit Bezug auf die Zeichnungen näher erläutert. In den Zeichnungen zeigen:
- Fig. 1: in einer schematischen Darstellung eine perspektivische Ansicht einer ersten Ausführungsform eines Überrollschutzsystems mit einer Aufnahmeeinheit und einem Überrollkörper;
- Fig. 2: eine perspektivische Darstellung eines Kunststoffkörpers der Aufnahmeeinheit von Fig. 1;
- Fig. 3: eine perspektivische Darstellung der Aufnahmeeinheit des Überrollschutzsystems von Fig. 1;
- Fig. 4: in einer schematischen Darstellung eine perspektivische Ansicht einer zweiten Ausführungsform eines Überrollschutzsystems mit einem Überrollkörper und einer Aufnahmeeinheit;
- Fig. 5: eine vergrößerte perspektivische Darstellung des Überrollschutzsystems von Fig. 4;
- Fig. 6: eine perspektivische Darstellung eines Kunststoffkörpers der Aufnahmeeinheit von Fig. 4;
- Fig. 7: eine perspektivische Darstellung der Aufnahmeeinheit des Überrollschutzsystems von Fig. 4;
- Fig. 8: in einer schematischen Darstellung eine perspektivische Ansicht einer dritten Ausführungsform eines Überrollschutzsystems mit einem Überrollkörper und einer Aufnahmeeinheit;
- Fig. 9: eine perspektivische Darstellung des Kunststoffkörpers der Aufnahmeeinheit des Überrollschutzsystems von Fig. 8;
- Fig. 10: eine perspektivische Darstellung der Aufnahmeeinheit des Überrollschutzsystems von Fig. 8;
- Fig. 11: in einer schematischen Darstellung eine perspektivische Ansicht einer weiteren Ausführungsform eines Überrollschutzsystems mit einem Überrollkörper und einer Aufnahmeeinheit;
- Fig. 12: eine perspektivische Ansicht einer Aufnahmeeinheit mit einem Ringanker;
- Fig. 13: einer perspektivische Ansicht einer Aufnahmeeinheit mit einem Zuganker und
- Fig. 14: in einer schematischen Darstellung eine perspektivische Ansicht eines an eine Fahrzeugkarosserie angebundenen Überrollschutzsystems.

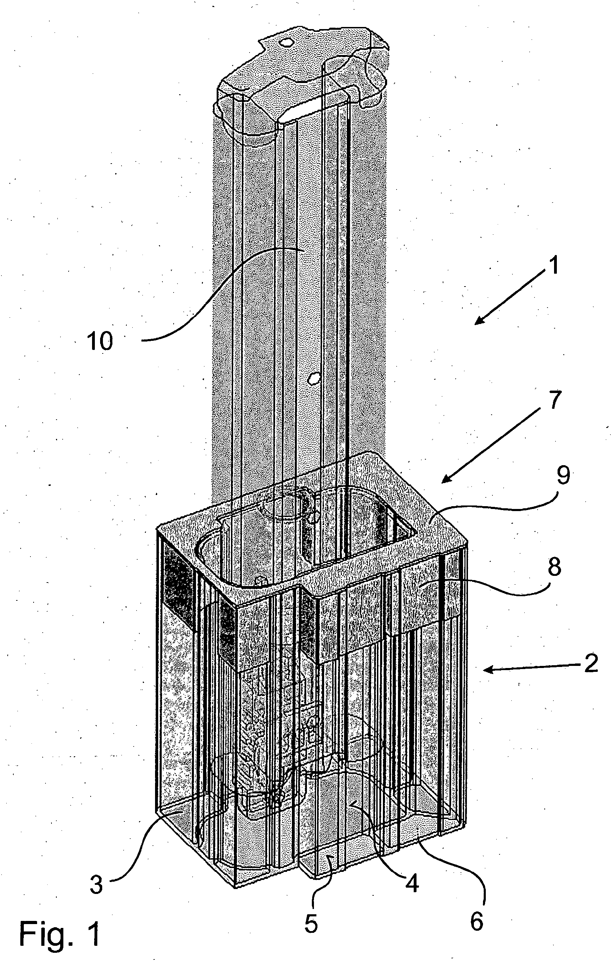

In Fig. 1 ist eine erste Ausführungsform eines Überrollschutzsystems 1 aufweisend einen Überrollkörper 10 sowie eine Aufnahmeeinheit 2 dargestellt.

Die Aufnahmeeinheit 2 ist aus einem in Umfangsrichtung betrachtet, abschnittsweise doppelwandigen Profil 3 gebildet, welcher koaxial zum Überrollkörper 10 angeordnet ist. Die Aufnahmeeinheit 2 umschließt somit den Überrollkörper 10 und gewährleistet somit eine zuverlässige Abstützung des Überrollkörpers 10 an der Aufnahmeeinheit 10.

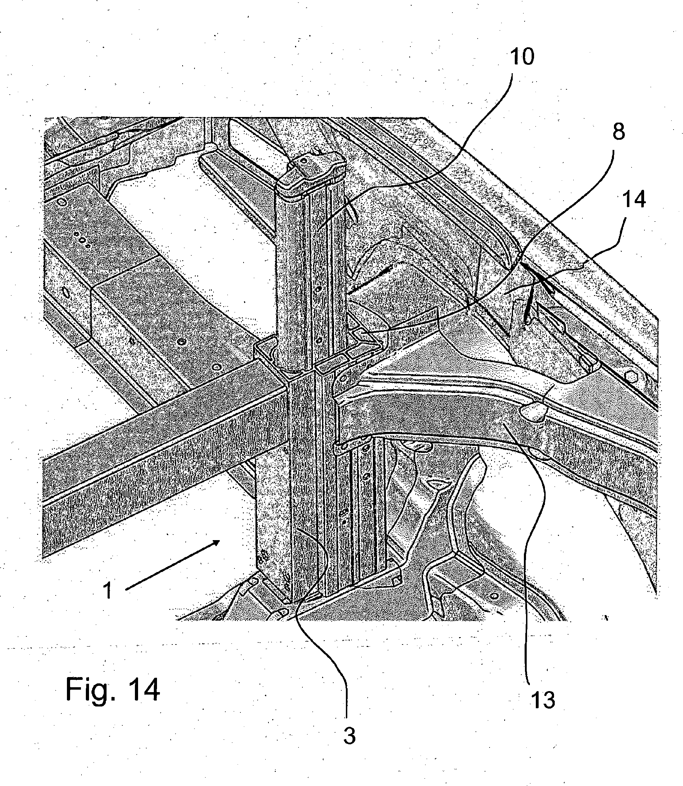

Der Überrollkörper 10 stützt sich im Inneren der Aufnahmeeinheit 2 an einer Innenwand 4 ab, so dass quer zur Längsachsenrichtung des Überrollkörpers 10 auf diesen wirkende Kräfte zuverlässig über die Innenwand 4 auf die Aufnahmeeinheit 2 übertragen werden können. Die Aufnahmeeinheit 2 ist ihrerseits über ihre Außenwand 5 mit über ein Tragprofil 13 mit der Fahrzeugkarosserie 14 verbunden, bzw. gegenüber dieser abgestützt und ermöglicht somit eine Übertragung der Kräfte auf die Fahrzeugkarosserie 14 (vgl. Fig. 14).

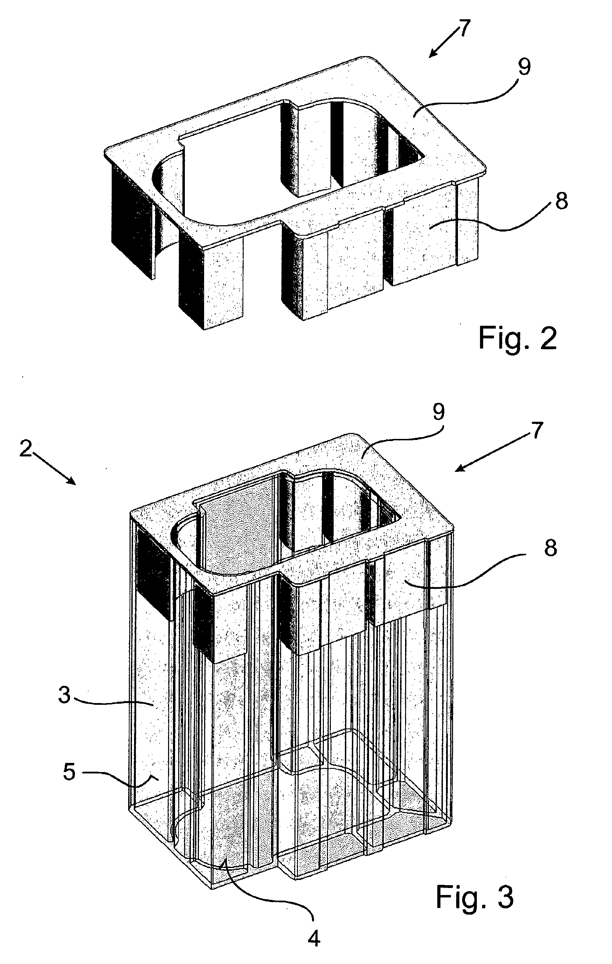

Die Aufnahmeeinheit 2 weist umlaufend einen Hohlraum 6 auf, welcher durch Stege oder einwandige Bereiche des Profils 3 gebildete Abschnitte in einzelne Kammern unterteilt ist. Der Hohlraum 6 ist dabei im - in Ausfahrrichtung des Überrollkörpers 10 betrachtet - oberen Bereich - mit einzelnen Kunststoffelementen 8 versehen, über die die Innenwand 4 gegenüber der Außenwand 5 abgestützt ist. Der durch die einzelnen Kunststoffelemente 8 gebildete Kunststoffkörper 7 weist dabei überdies einen Träger 9 auf, an dem die einzelnen Kunststoffelemente 8 angeordnet sind, so dass sich der gesamte Kunststoffkörper 7 in einfacher Weise in das endseitig offene Profil 3 einsetzen lässt. Der Träger 9 des Kunststoffkörpers ₇ ragt dabei umlaufend über die Kunststoffelemente 8 heraus und liegt im montierten Zustand auf dem endseitig offenen Profil 3 auf und verschließt diese zuverlässig, so dass Verschmutzungen oder das Eindringen von Feuchtigkeit in das Profil 3 ausgeschlossen werden können (vgl. Fig. 2 und 3).

Darüber hinaus kann der Träger 9 als Zug-/Druckelement fungieren. Im Belastungsfall werden auf einen Bereich des Hohlraums 6 durch den Überrollkörper 10 aufgebrauchte Druckbelastungen in auf gegenüberliegende Bereiche übertragen, wo diese als wirkende Zugbelastungen wirken. Vorzugsweise weist der Träger 9 hierzu einen Metallkern, eine Metallplatte oder einen Metallstab auf.

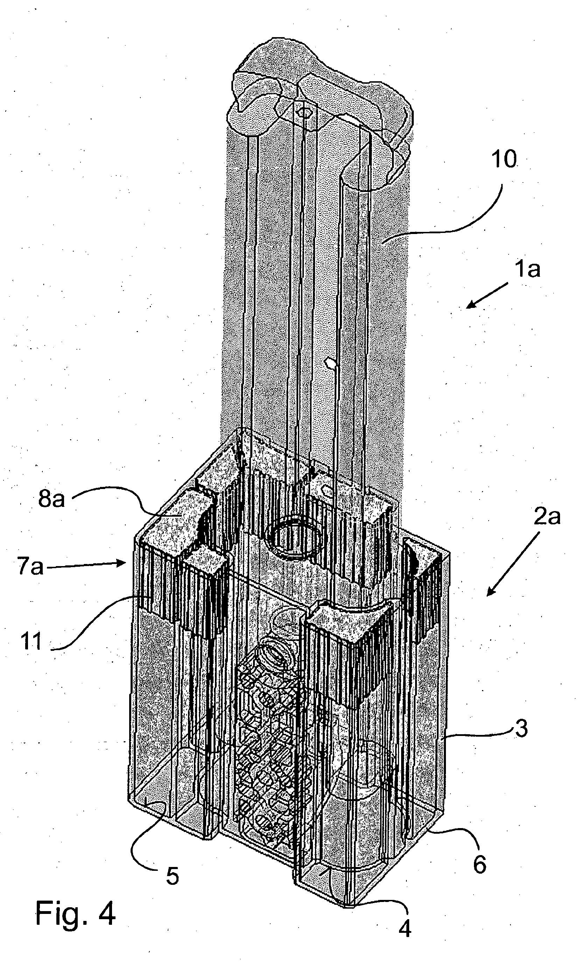

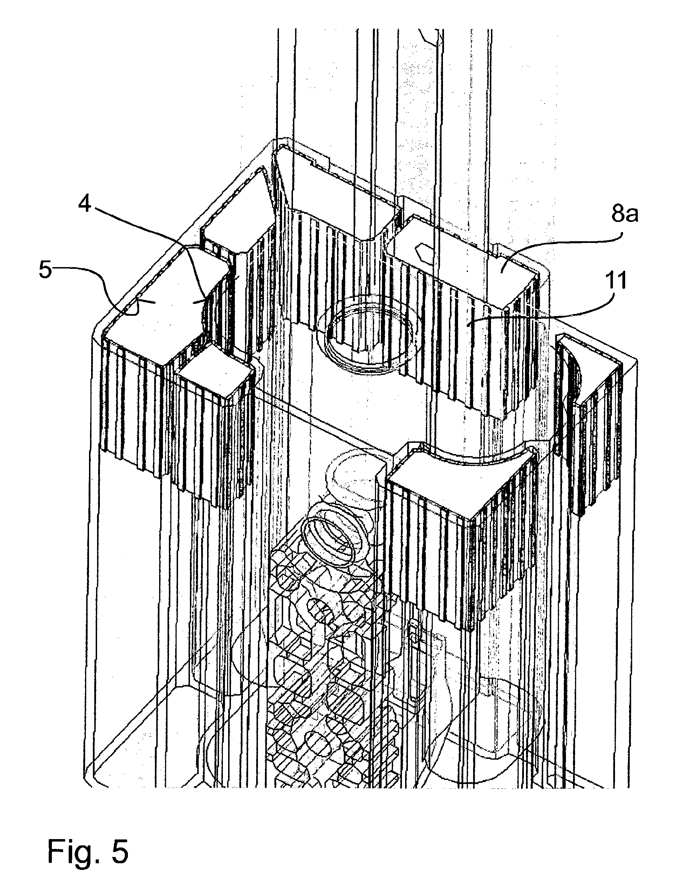

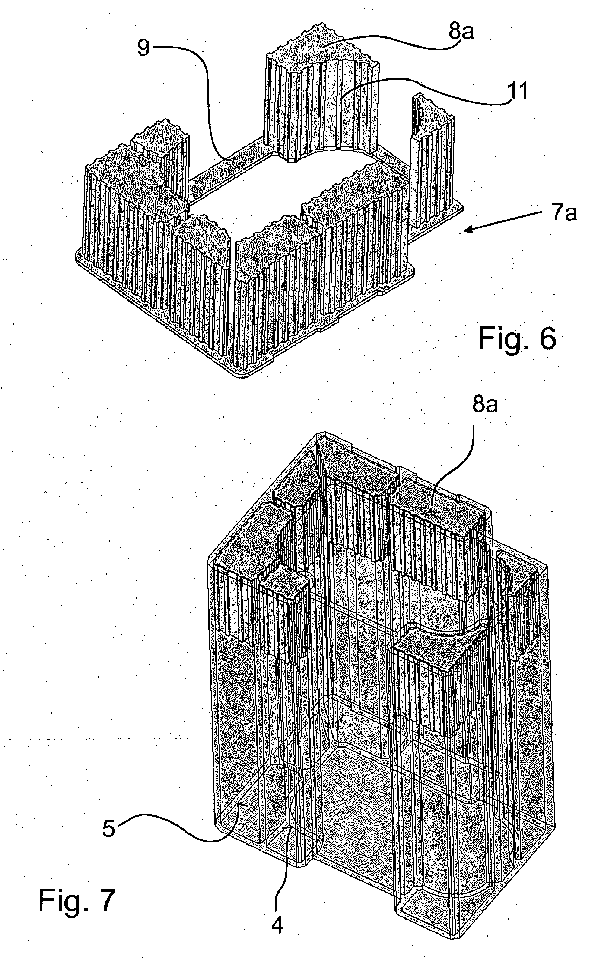

Die in den Fig. 4 bis 7 dargestellte zweite Ausführungsform eines Überrollschutzsystems 1a unterscheidet sich von dem zuvor dargestellten Überrollschutzsystems 1 dadurch, dass der Kunststoffkörper 7a durch Kunststoffelemente 8a gebildet ist, welche umlaufend einzelne, sich in Längsachsenrichtung des Profils 3 erstreckende Rippen 11 aufweisen. Die Rippen 11 sich dabei aus einem gegenüber dem übrigen Kunststoff der Kunststoffelemente 8 weicheren Kunststoff gebildet und ermöglichen eine einfache, formschlüssige Anordnung der Kunststoffelemente 8a in den durch die einzelnen Kammern gebildeten Hohlraum 6. Darüber hinaus ermöglicht die Verwendung eines weicheren Kunststoffs für die Rippen 11 die Möglichkeit, im Crashfall auftretende Belastungen des Kopfes, welche durch einen Aufprall des Kopfes auf den Überrollkörper 10 resultieren durch Verformung, nämlich Stauchung der Rippen, abzubauen, wodurch Verletzungen reduziert werden können.

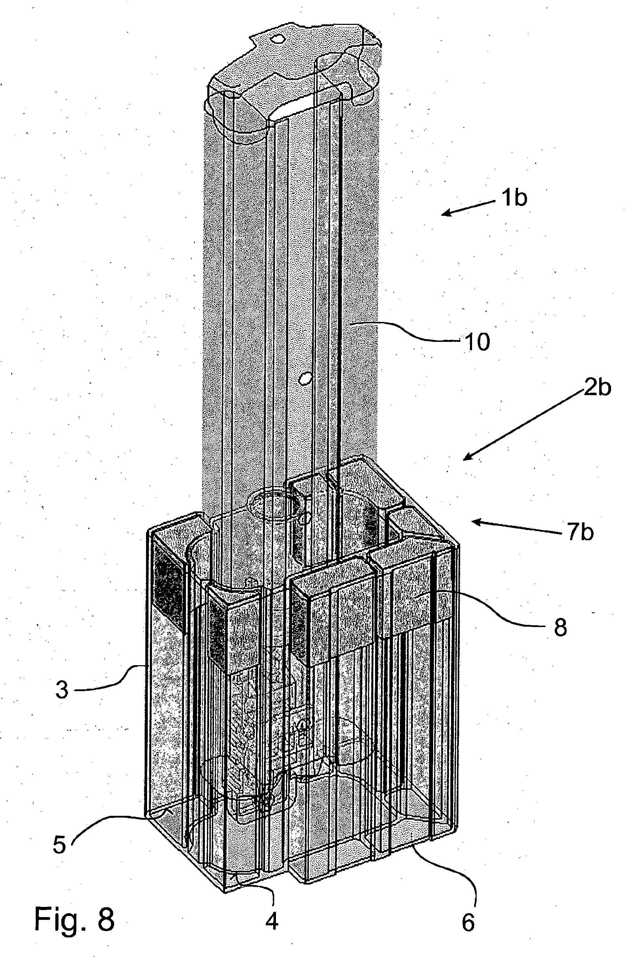

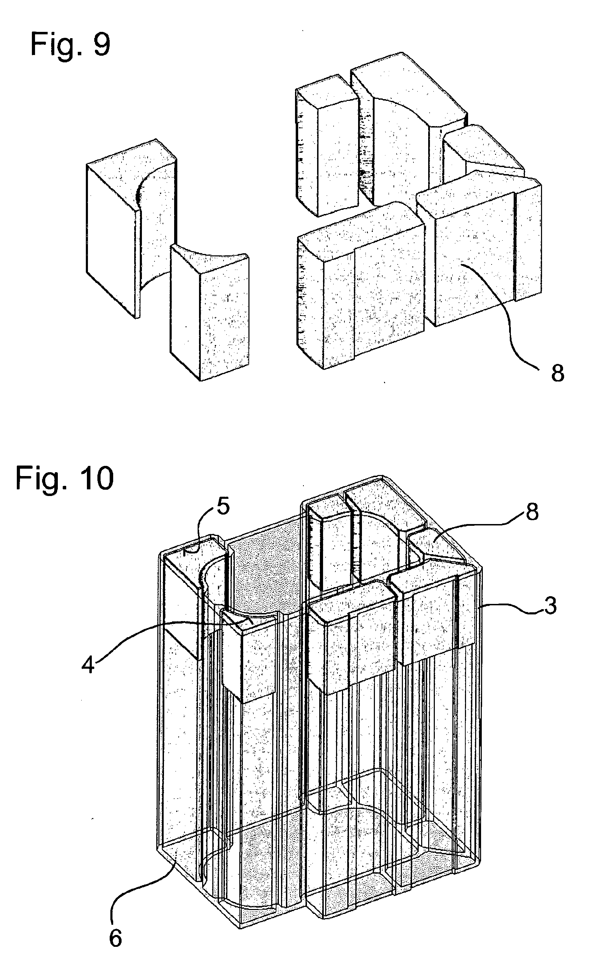

Ein drittes Ausführungsbeispiel eines Überrollschutzsystems 1b ist in den Fig. 8 bis 10 dargestellt. Im Gegensatz zu den zuvor dargestellten Ausführungsformen der Überrollschutzsysteme 1, 1a sind die einzelnen Kammern des Hohlraums 6 durch einzelne, nicht miteinander verbundener Kunststoffelemente 8b ausgefüllt. Die Kunststoffelemente können dabei - quer zum Überrollkörper 10 betrachtet - im Außenbereich eine geringere Festigkeit als im Innenbereich aufweisen, so dass auch diese Kunststoffelemente 8b die Möglichkeit des Energieabbaus durch Verformung bieten.

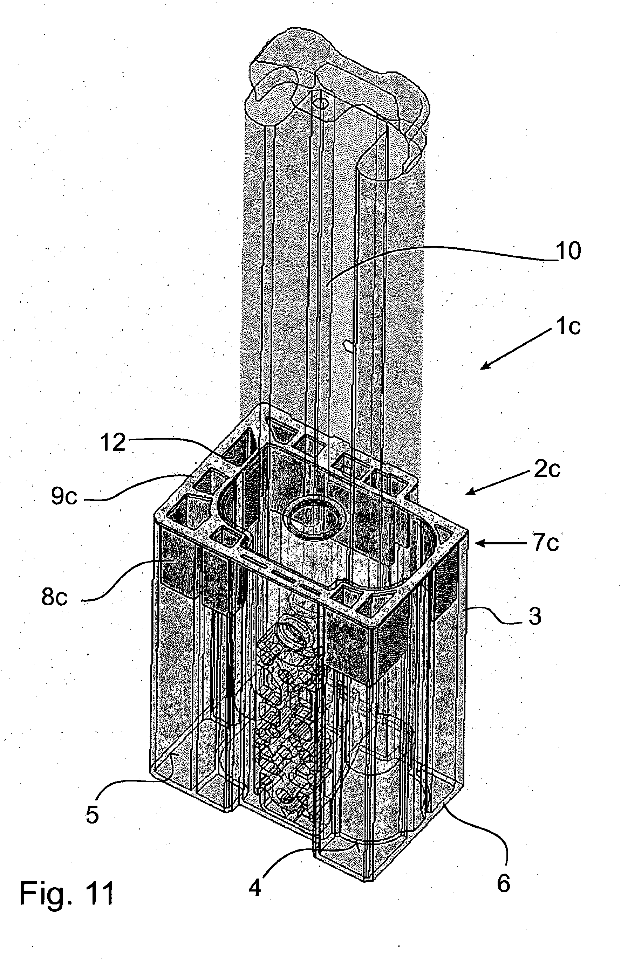

In einem weiteren Ausführungsbeispiel der Erfindung ist in Fig. 11 ein Überrollschutzsystem 1c dargestellt, bei dem der Kunststoffkörper 7c durch einzelne über einen Träger 9c miteinander verbundene Kunststoffelemente 8c gebildet ist, wobei sich die Kunststoffelemente 8c von den zuvor dargestellten Kunststoffelementen 8, 8a, 8b dadurch unterscheiden, dass diese im Bereich zwischen der Außenwand 5 und der Innenwand 4 einen Hohlraum 12 aufweisen, welcher ebenfalls die Möglichkeit bietet, durch Verformung einen Energieabbau zu bewirken.

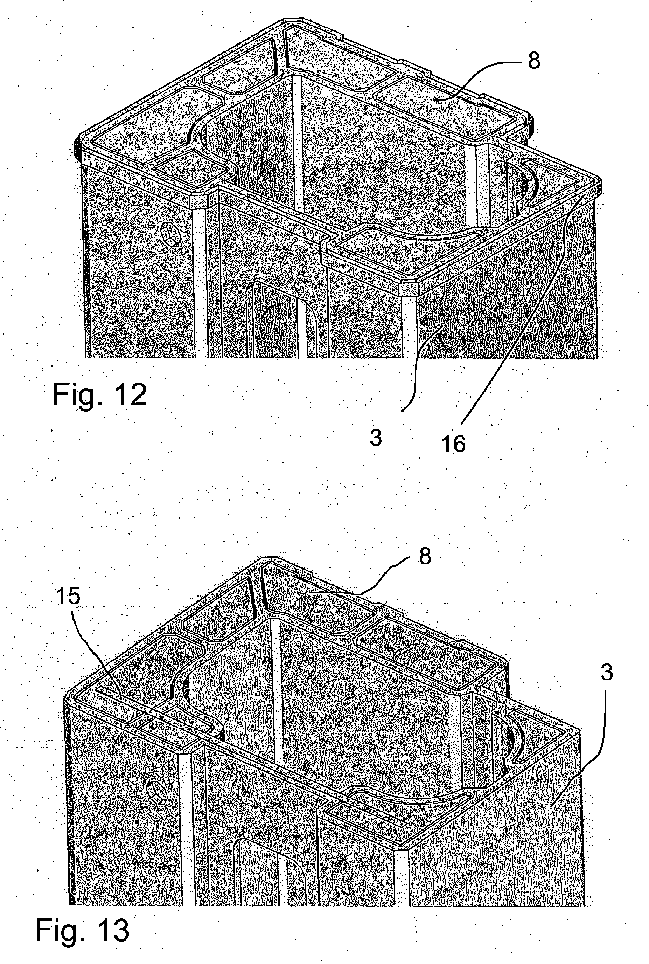

Bei dem in Fig. 13 dargestellten Ausführungsbeispiel erstreckt sich zwischen zwei benachbart zueinander in Eckbereichen angeordneten Kunststoffelementen 8 ein Zuganker 15, der als Zug-/Druckelement zur Kraftübertragung zwischen den beiden Kunststoffelementen 8 dient.

Eine weitere Ausführungsform eines Zug-/Druckelements ist in Fig. 12 dargestellt, in der dieses als Ringanker 16 ausgebildet ist, der umlaufend an dem Profil 3 anliegt. Auch diese Ausgestaltung ist, wie der Zuganker 15, dazu geeignet die einseitig auf das Profil 3 wirkenden Druckkräfte teilweise in auf gegenüberliegende Bereiche wirkende Zugkräfte umzuwandeln.

Die üblicherweise vorgesehene Anbindung des Überrollschutzsystems 1 an eine Fahrzeugkarosserie 14 ist in Fig. 14 dargestellt. Das Profil 3 steht dabei auf einem Teil der Karosserie 14 auf und ist seitlich zumindest über ein Tragprofil 13 mit der Karosserie 14 verbunden, so dass die auf das Profil 3 wirkenden Kräfte auf die Karosserie 14 übertragen werden können.

Sämtliche dargestellten Aufnahmeeinheiten 2, 2a, 2b, 2c weisen ein identisches Profil 3 auf, wobei der Hohlraum 6 durch über Stege oder einwandige Bereiche voneinander abgetrennte Kammern gebildet ist. Die Profile 3 sind aus einem dünnen Stahl-Blech gefertigt, dessen Materialdicke vorzugsweise im Bereich von 0,5 mm bis 3 mm liegt, da die gewünschten Festigkeitseigenschaften über den Kunststoffkörper 7, 7a, 7b, 7c gewährleistet werden können. Die Füllhöhe liegt dabei im Bereich von 100-10 mm, bevorzugt zwischen 70 und 30 mm, besonders bevorzugt zwischen 60 und 40 mm.

### Bezugszeichenliste

- 1: Überrollschutzsystem
- 2, 2a, 2b, 2c: Aufnahmeeinheit
- 3: Profil
- 4: Innenwand
- 5: Außenwand
- 6: Hohlraum
- 7, 7a, 7b, 7c: Füllstoff -> Kunststoffkörper
- 8: Kunststoffelemente / Elemente
- 9: Träger
- 10: Überrollkörper
- 11: Rippen
- 12: Hohlräume
- 13: Tragprofil
- 14: Fahrzeugkarosserie
- 15: Zuganker
- 16: Ringanker

## Patentansprüche

1. Überrollschutzsystem für Kraftfahrzeuge, mit
- einer am Kraftfahrzeug anordbaren Aufnahmeeinheit und
- einem zwischen einer Lagerungsposition und einer Überschlagsposition verstellbar an der Aufnahmeeinheit angeordnetem Überrollkörper, wobei die Aufnahmeeinheit (2, 2a, 2b, 2c) koaxial zum Überrollkörper (10) angeordnet ist
- die Aufnahmeeinheit (2, 2a, 2b, 2c) ein zumindest abschnittsweise doppelwandiges Profil (3) aufweist, das einen durch eine Innenwand (4) und eine Außenwand (5) abgegrenzten Hohlraum (6) aufweist, **dadurch gekennzeichnet, dass** der Hohlraum (6) zumindest abschnittsweise mit einem sich zwischen der Außenwand (5) und der Innenwand (4) erstreckenden Füllstoff (7, 7a, 7b, 7c) ausgefüllt ist.

2. Überrollschutzsystem nach Anspruch 1, **dadurch gekennzeichnet, dass** das Profil (3) in Längsachsenrichtung endseitig offen ausgebildet ist, das zumindest einenends durch den Füllstoff (7) verschlossen ist.

3. Überrollschutzsystem nach Anspruch 1 oder 2, **gekennzeichnet durch** ein mindestens zwei Bereich des ausgefüllten Hohlraums (6) verbindendes Zug-/ Druckelement.

4. Überrollschutzsystem nach einem der vorhergehenden Ansprüche, **dadurch gekennzeichnet, dass** der Füllstoff durch einen Kunststoff, insbesondere einen Kunststoffkörper (7, 7a, 7b, 7c) gebildet ist.

5. Überrollschutzsystem nach einem der vorhergehenden Ansprüche, **dadurch gekennzeichnet, dass** der Füllstoff, insbesondere der Kunststoffkörper (7, 7a, 7c) durch einzelne an einem Träger (9) angeordnete Füllstoffelemente, insbesondere Kunststoffelemente (8, 8a, 8c) gebildet ist.

6. Überrollschutzsystem nach einem der vorhergehenden Ansprüche, **dadurch gekennzeichnet, dass** der Träger (9) als Zug-/Druckelement, insbesondere als Kunststoffteil mit Metalleinleger ausgebildet ist.

7. Überrollschutzsystem nach einem der vorhergehenden Ansprüche, **dadurch gekennzeichnet, dass** der Füllstoff, insbesondere Kunststoffkörper (7, 7a, 7b, 7c) durch Ausgießen des Hohlraums (4) mit flüssigem Kunststoff gebildet ist, oder in den Hohlraum (4) eingesteckt ist.

8. Überrollschutzsystem nach einem der vorhergehenden Ansprüche, **dadurch gekennzeichnet, dass** der Füllstoff, insbesondere Kunststoffkörper (7, 7a, 7b, 7c) kraft- und/oder stoffschlüssig mit dem Profil (3) verbunden ist.

9. Überrollschutzsystem nach einem der vorhergehenden Ansprüche, **dadurch gekennzeichnet, dass** der Füllstoff, insbesondere Kunststoffkörper (7, 7a, 7b, 7c) mit dem Profil (3) verschraubt ist.

10. Überrollschutzsystem nach einem der vorhergehenden Ansprüche, **dadurch gekennzeichnet, dass** der Füllstoff, insbesondere Kunststoffkörper (7, 7a, 7b, 7c) einstückig ausgebildet ist.

11. Überrollschutzsystem nach einem der vorhergehenden Ansprüche, **dadurch gekennzeichnet, dass** der Füllstoff, insbesondere Kunststoffkörper (7, 7a, 7b, 7c) senkrecht zur Verstellrichtung des Überrollkörpers (10) betrachtet, Bereiche unterschiedlicher Festigkeit aufweist.

12. Überrollschutzsystem nach einem der vorhergehenden Ansprüche, **dadurch gekennzeichnet, dass** der Füllstoff, insbesondere Kunststoffkörper (7, 7a, 7b, 7c) aus zwei oder mehreren Kunststoffen unterschiedlicher Festigkeit gebildet ist.

13. Überrollschutzsystem nach einem der vorhergehenden Ansprüche, **dadurch gekennzeichnet, dass** der Füllstoff, insbesondere Kunststoffkörper (7a) außenseitig angeordnete Rippen (11) aufweist, die besonders bevorzugt aus einem gegenüber dem übrigen Kunststoffkörper (7a) abweichenden, insbesondere weicheren Kunststoff gebildet sind.

14. Überrollschutzsystem nach einem der vorhergehenden Ansprüche, **dadurch gekennzeichnet, dass** der Füllstoff, insbesondere Kunststoffkörper (7c) Hohlräume (12) aufweist.

## Claims

1. A rollover protection system for motor vehicles with
- a receiving unit arrangeable on the motor vehicle and
- a rollover body arranged in an adjustable manner on the receiving unit between a mounting position and a rollover position, wherein the receiving unit (2, 2a, 2b, 2c) is arranged coaxially with respect to the rollover body (10),
- the receiving unit (2, 2a, 2b, 2c) has a profile (3) that is double-walled at least in sections, which has a hollow space (6) delimited by an inner wall (4) and an outer wall (5), **characterized in that** the hollow space (6) is filled at least in sections with a filler material (7, 7a, 7b, 7c) extending between the outer wall (5) and the inner wall (4).

2. The rollover protection system according to claim 1, **characterized in that** the profile (3) is designed open on the end side in the longitudinal direction, which is closed at least on one end by the filler material (7).

3. The rollover protection system according to claim 1 or 2, **characterized by** a pull/push element connecting at least two areas of the filled hollow space (6).

4. The rollover protection system according to one of the preceding claims, **characterized in that** the filler material is formed by a plastic, in particular a plastic body (7, 7a, 7b, 7c).

5. The rollover protection system according to one of the preceding claims, **characterized in that** the filler material, in particular the plastic body (7, 7a, 7c) is formed by filler material elements, in particular plastic elements (8, 8a, 8c) arranged individually on a support (9).

6. The rollover protection system according to one of the preceding claims, **characterized in that** the support (9) is designed as a pull/push element, in particular a plastic part with a metal insert.

7. The rollover protection system according to one of the preceding claims, **characterized in that** the filler material, in particular plastic body (7, 7a, 7b, 7c), is formed with liquid plastic through effusion of the hollow space (4), or is inserted into the hollow space (4).

8. The rollover protection system according to one of the preceding claims, **characterized in that** the filler material, in particular plastic body (7, 7a, 7b, 7c), is connected with the profile (3) in a force- and/or positive-fitting manner.

9. The rollover protection system according to one of the preceding claims, **characterized in that** the filler material, in particular plastic body (7, 7a, 7b, 7c), is screwed to the profile (3).

10. The rollover protection system according to one of the preceding claims, **characterized in that** the filler material, in particular plastic body (7, 7a, 7b, 7c), is designed as one piece.

11. The rollover protection system according to one of the preceding claims, **characterized in that** the filler material, in particular plastic body (7, 7a, 7b, 7c), has areas with different strengths, as observed perpendicular to the adjustment direction of the rollover body (10).

12. The rollover protection system according to one of the preceding claims, **characterized in that** the filler material, in particular plastic body (7, 7a, 7b, 7c), is formed from two or more plastics with different strengths.

13. The rollover protection system according to one of the preceding claims, **characterized in that** the filler material, in particular plastic body (7a), has ribs (11) arranged on the outside, which are particularly preferably formed from a plastic that is different from the other plastic body (7a), in particular softer.

14. The rollover protection system according to one of the preceding claims, **characterized in that** the filler material, in particular plastic body (7c), has hollow spaces (12).

## Revendications

1. Système de protection contre les tonneaux pour véhicules automobiles, avec
- une unité de réception pouvant être disposée sur le véhicule automobile et
- un corps de protection contre les tonneaux disposé de façon réglable sur l'unité de réception entre une position de rangement et une position de renversement, l'unité de réception (2, 2a, 2b, 2c) étant disposée de façon coaxiale au corps de protection contre les tonneaux (10),
- l'unité de réception (2, 2a, 2b, 2c) présentant un profilé (3) à double paroi au moins par tronçons qui présente un espace creux (6) délimité par une paroi intérieure (4) et par une paroi extérieure (5),
**caractérisé en ce que**
l'espace creux (6) est, au moins par tronçons, rempli d'une charge (7, 7a, 7b, 7c) s'étendant entre la paroi extérieure (5) et la paroi intérieure (4).

2. Système de protection contre les tonneaux selon la revendication 1, **caractérisé en ce que** le profilé (3) est constitué de façon ouverte côté extrémité dans la direction d'axe longitudinal, qui est obturé par la charge (7) au moins à une extrémité.

3. Système de protection contre les tonneaux selon la revendication 1 ou 2, **caractérisé par** un élément de traction/pression raccordant au moins deux zones de l'espace creux (6) rempli.

4. Système de protection contre les tonneaux selon une des revendications précédentes, **caractérisé en ce que** la charge est formée d'une matière synthétique, en particulier d'un corps en matière synthétique (7, 7a, 7b, 7c).

5. Système de protection contre les tonneaux selon une des revendications précédentes, **caractérisé en ce que** la charge, en particulier le corps en matière synthétique (7, 7a, 7c), est formée d'éléments de charge individuels disposés sur un support (9), en particulier d'éléments en matière synthétique (8, 8a, 8c).

6. Système de protection contre les tonneaux selon une des revendications précédentes, **caractérisé en ce que** le support (9) est constitué en tant qu'élément de traction/pression, en particulier en tant que partie en matière synthétique avec insert métallique.

7. Système de protection contre les tonneaux selon une des revendications précédentes, **caractérisé en ce que** la charge, en particulier le corps en matière synthétique (7, 7a, 7b, 7c), est formée par coulée de matière synthétique liquide dans l'espace intérieur (4) ou est introduite dans l'espace creux (4).

8. Système de protection contre les tonneaux selon une des revendications précédentes, **caractérisé en ce que** la charge, en particulier le corps en matière synthétique (7, 7a, 7b, 7c), est raccordée au profilé (3) par liaison de force et/ou liaison de matière.

9. Système de protection contre les tonneaux selon une des revendications précédentes, **caractérisé en ce que** la charge, en particulier le corps en matière synthétique (7, 7a, 7b, 7c), est assemblée par vissage au profilé (3).

10. Système de protection contre les tonneaux selon une des revendications précédentes, **caractérisé en ce que** la charge, en particulier le corps en matière synthétique (7, 7a, 7b, 7c), est constituée d'une seule pièce.

11. Système de protection contre les tonneaux selon une des revendications précédentes, **caractérisé en ce que** la charge, en particulier le corps en matière synthétique (7, 7a, 7b, 7c), vue perpendiculairement à la direction de réglage du corps de protection contre les tonneaux (10), présente des zones de résistance différente.

12. Système de protection contre les tonneaux selon une des revendications précédentes, **caractérisé en ce que** la charge, en particulier le corps en matière synthétique (7, 7a, 7b, 7c), est formée de deux matières synthétiques ou plus de solidité différente.

13. Système de protection contre les tonneaux selon une des revendications précédentes, **caractérisé en ce que** la charge, en particulier le corps en matière synthétique (7a), présente des nervures (11) disposées côté extérieur qui sont, de façon particulièrement préférée, formées d'une matière synthétique qui diffère du reste du corps en matière synthétique (7a), en particulier d'une matière synthétique plus tendre.

14. Système de protection contre les tonneaux selon une des revendications précédentes, **caractérisé en ce que** la charge, en particulier le corps en matière synthétique (7c), présente des espaces creux (12).
